# EUROPÄISCHE PATENTSCHRIFT

(11) **EP 2 826 121 B1**
(45) Veröffentlichungstag und Bekanntmachung des Hinweises auf die Patenterteilung: **02.08.2023**
(21) Anmeldenummer: 13708190.7
(22) Anmeldetag: 08.03.2013
(51) Int. Cl.: H02J 3/14, H02J 3/28, H02J 3/38, H02J 3/46

(54) **VERFAHREN ZUM STEUERN EINER ANORDNUNG ZUM EINSPEISEN ELEKTRISCHEN STROMS IN EIN VERSORGUNGSNETZ**
METHOD FOR CONTROLLING AN ARRANGEMENT FOR SUPPLYING ELECTRIC CURRENT TO A POWER SUPPLY SYSTEM
PROCÉDÉ DE COMMANDE D'UN SYSTÈME POUR ALIMENTER UN RÉSEAU D'ALIMENTATION EN COURANT ÉLECTRIQUE

(30) Priorität: 16.03.2012 DE 102012204220
(43) Veröffentlichungstag der Anmeldung: 21.01.2015
(73) Patentinhaber: Wobben Properties GmbH, 26607 Aurich (DE)
(72) Erfinder: BEEKMANN, Alfred, 26639 Wiesmoor (DE)
(74) Vertreter: Eisenführ Speiser
(86) Internationale Anmeldenummer: PCT/EP2013/054794
(87) Internationale Veröffentlichungsnummer: WO 2013/135592

(56) Entgegenhaltungen:
- EP-A2- 1 739 824
- WO-A1-2010/048706
- WO-A2-03/077398
- CA-A1- 2 797 893
- US-A1- 2008 001 479
- US-A1- 2011 273 022

## Beschreibung

Die vorliegende Erfindung betrifft ein Verfahren zum Steuern einer eine Windenergieanlage aufweisenden Einspeiseanordnung zum Einspeisen elektrischer Leistung bzw. elektrischer Energie in ein elektrisches Versorgungsnetz. Weiterhin betrifft die vorliegende Erfindung eine solche Einspeiseanordnung. Weiterhin betrifft die vorliegende Erfindung einen Windpark mit mehreren Windenergieanlagen und wenigstens einer Einspeisevorrichtu ng.

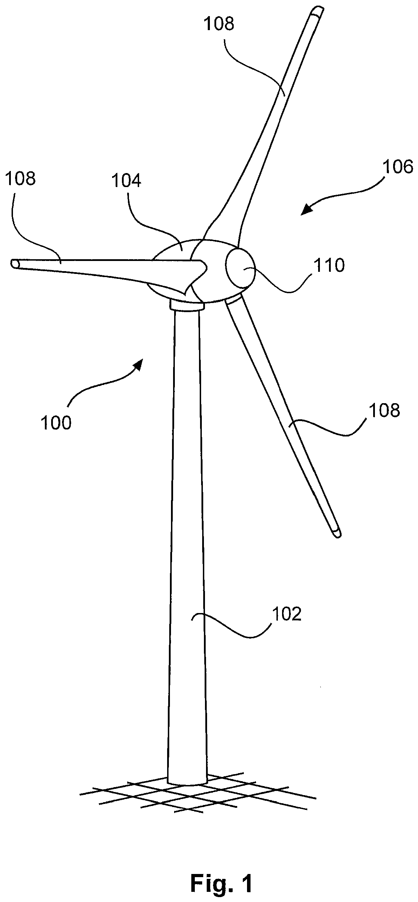

Windenergieanlagen, die aus Wind elektrischen Strom erzeugen und diesen in ein elektrisches Versorgungsnetz einspeisen, sind allgemein bekannt. Ein Beispiel einer solchen Windenergieanlage ist in Fig. 1 schematisch dargestellt. Eine solche Windenergieanlage kann somit auch als Einspeiseanordnung aufgefasst werden, die eine Windenergieanlage umfasst.

Üblicherweise, zumindest aber vorzugsweise, wird oder wurden Windenergieanlagen im sog. Netzparallelbetrieb betrieben. Darunter wird allgemein verstanden, dass die jeweilige Windenergieanlage jeweils so viel elektrische Leistung erzeugt, wie aufgrund vorherrschenden Windes möglich ist, und diese elektrische Leistung in das elektrische Versorgungsnetz einspeist. Das elektrische Versorgungsnetz, das nachfolgend auch synonym als Netzwerk oder als Netz bezeichnet wird, hat resultierende Schwankungen der gespeisten Leistung ausgeglichen bzw. aufgefangen.

Ein solcher Netzparallelbetrieb ist für das Netz mit steigendem Anteil elektrischer Leistung von Windenergieanlagen im Netz jedoch problematisch. Wünschenswert ist, dass auch Windenergieanlagen das elektrische Netz stützen und sich insbesondere dem Bedarf der Leistung des elektrischen Netzes anpassen können.

In diesem Sinne sind bereits Lösungen bekannt, bei denen Windenergieanlagen netzstützende Funktionen übernehmen können. Bspw. zeigt die US 6,984,898 ein Verfahren bei dem die Windenergieanlage ihre eingespeiste Leistung abhängig von der Netzspannung regelt. Aus der US 6,891,281 ist ein Verfahren bekannt bei dem die Leistung abhängig einer Frequenz der Spannung im Netz geregelt wird. Die US 7,462,946 beschreibt ein Verfahren zum Einspeisen elektrischer Leistung in ein Versorgungsnetz durch eine Windenergieanlage, das einen Kurzschluss im Versorgungsnetz berücksichtigen kann. US 6,965,174 schlägt ein Verfahren vor, bei dem eine ins Netz einspeisende Windenergieanlage abhängig von der Netzspannung einen Phasenwinkel und damit einen Blindleistungsanteil der eingespeisten Leistung einstellt, um auch dadurch einen Beitrag zur Netzstützung zu liefern. Eine Berücksichtigung von Kurzschlüssen im Netz schlägt auch die US 7,525,208 vor.

All diese Verfahren liefern einen Beitrag zur Netzstützung, können aber an der Tatsache nichts ändern, dass eine Windenergieanlage nicht mehr elektrische Leistung aus dem Wind erzeugen kann, als die jeweils vorherrschenden Windbedingungen zulassen. Insoweit sind insbesondere einer Leistungserhöhung hinsichtlich Amplitude als auch zeitlicher Dauer einer solchen Erhöhung enge Grenzen gesetzt.

Um auch eine Erhöhung der eingespeisten Leistung einer Windenergieanlage erreichen zu können, schlägt die EP 2 411 669 vor, eine kurzzeitige Leistungserhöhung zum Stützen des Netzes dadurch zu erreichen, dass Leistung aus der Schwungmasse des rotierenden Rotors der Windenergieanlage ausgenutzt wird. Auch einer solchen Leistungserhöhung sind enge Grenzen gesetzt, die sich nicht zuletzt aus der maximal gespeicherten kinetischen Energie in dem Rotor ergeben. Es kommt hinzu, dass ein gewisser Aufwand erforderlich ist, die kinetische Energie des Rotors der Windenergieanlage in elektrischen Strom umzuwandeln, um die gewünschte Erhöhung der eingespeisten elektrischen Leistung vorzunehmen.

Das deutsche Patent- und Markenamt hat in der Prioritätsanmeldung folgenden Stand der Technik recherchiert: DE 10 2009 018 126 A1 und DE 10 2008 052 827 A1.

WO 2010/048706 A1 betrifft ein Verfahren zum Herstellen von Wasserstoff mittels einer Anordnung von Elektrolyseuren, die durch einen Windpark versorgt werden.

EP 1 739 824 A2 beschreibt ein Verfahren zur Einspeisung mittels einer externen SollWert-Vorgabe ["target power output level"], wie sie für zentral gesteuerte Erzeugereinheiten üblich ist.

WO 03/077398 A2 beschreibt ein Inselnetz und ein Verfahren zum Betreiben des Inselnetzes.

US 2008/0001479 betrifft ein Verfahren und eine Vorrichtung zur Stützung der Frequenz in einem elektrischen Versorgungsnetz während einer plötzlichen Änderung der Netzlast und/oder der Erzeugungsleistung.

CA 2 797 893 A1 betrifft ein Verfahren zum Einspeisen elektrischer Leistung wobei die Einspeiseanordnung eine Windenergieanlage, einen elektrischen Verbraucher und einen elektrischen Speicher aufweist, und wobei die Einspeiseanordnung Primärregelleistung aktivieren kann.

US 2011/0273022 A1 betrifft ein Verfahren und eine Vorrichtung zur Steuerung eines hybriden Energiesystems, umfassend Windenergieanlagen, elektrische Verbraucher und elektrische Speicher, wobei das System eine Gleichspannungsebene aufweist, wobei eine Energieverteilung abhängig von der Spannung der Gleichspannungsebene erfolgt. Eine Netzüberwachung dient dazu, das hybride System vom Netz auszuschalten, falls das Netz instabil wird.

Der vorliegenden Erfindung liegt somit die Aufgabe zugrunde, zumindest eins der o.g. Probleme zu adressieren. Insbesondere soll eine Lösung angegeben werden, mit der auch bei Verwendung einer Windenergieanlage die Einspeisung elektrischer Leistung erhöht werden kann. Diese Erhöhung der elektrischen Leistung soll insbesondere möglichst einfach, möglichst schnell und möglichst dauerhaft durchgeführt werden können. Dabei sollen auch eine signifikante Leistungserhöhung angestrebt werden, insbesondere möglichst um wenigstens 10 %, 20 % oder wenn möglich sogar 50 % oder mehr. Zumindest soll eine alternative Lösung vorgeschlagen werden.

Diese Aufgabe wird erfindungsgemäß durch ein Verfahren mit den in Patentanspruch 1 angegebenen Merkmalen und durch eine Vorrichtung mit den in Patentanspruch 8 angegebenen Merkmalen gelöst.

Erfindungsgemäß wird ein Verfahren nach Anspruch 1 vorgeschlagen. Demnach wird eine Einspeiseanordnung gesteuert, die eine Windenergieanlage aufweist. Die Steuerung erfolgt so, dass die Windenergieanlage elektrische Leistung erzeugt. Es wird darauf hingewiesen, dass hier unter der Erzeugung elektrischer Leistung oder Erzeugung elektrischer Energie das Wandeln von Leistung bzw. Energie in einer anderen Form in elektrische Leistung bzw. Energie zu verstehen ist. Die Windenergieanlage erzeugt also elektrische Leistung in dem sie Energie aus dem Wind in elektrische Energie umwandelt. Von dieser so erzeugten elektrischen Leistung wird ein erster Teil in das elektrische Versorgungsnetz eingespeist. Ein zweiter Teil, der durch die Windenergieanlage erzeugten elektrischen Leistung wird einem elektrischen Verbraucher zum Verbrauchen zugeführt. Unter einem elektrischen Verbraucher ist ein Verbraucher im elektrischen Sinne zu verstehen, der nämlich die elektrische Leistung abnimmt.

Erfindungsgemäß wird wenigstens ein Netzzustand des elektrischen Versorgungsnetzes überwacht oder beobachtet. Hier kommen verschiedene Netzzustände in Betracht, wie unten noch beschrieben wird. Die Überwachung des Netzzustandes geht jedoch zumindest bei der Auswertung über das hinaus, was eine Einspeiseanordnung ohnehin berücksichtigen muss, nämlich Frequenz, Phase und Amplitude der Spannung im Netz, insbesondere an dem Netzeinspeisepunkt, an dem die Einspeiseanordnung die elektrische Leistung des Netzes einspeist.

Es wird nun abhängig dieses wenigstens einen überwachten Netzzustandes der dem Verbraucher zugeführten zweiten Teil der erzeugten elektrischen Leistung ganz oder teilweise reduziert und dem ersten elektrischen Teil zugeschlagen. Der erste Teil der elektrischen Leistung wird somit um diesen reduzierten Teil erhöht und entsprechend die elektrische Leistung erhöht, die in das Versorgungsnetz eingespeist wird.

Eine windabhängige Reduzierung kann auch dadurch realisiert werden, dass die eingespeiste Leistung konstant gehalten wird. Der zweite Teil der erzeugten Leistung kann dann von der Schwankung der insgesamt erzeugten elektrischen Leistung abhängen. Die Information über den Wind fließt dann über die Information über die erzeugte elektrische Leistung ein.

Es wird eine vom Netzzustand abhängige Reduzierung des zweiten Teils vorgeschlagen.

Wird also auf Grund des wenigstens einen überwachten Netzzustandes erkannt oder angenommen oder erwartet, dass es vorteilhaft ist, die in das Netz einzuspeisende Leistung zu erhöhen, kann dies auf einfache Weise dadurch erfolgen, dass ein Teil der dem Verbraucher zugeführten elektrischen Leistung zum Einspeisen ins Netz umgeleitet wird. Das hat unter anderem den Vorteil, dass eine schnelle Bereitstellung zusätzlicher elektrischer Leistung auf einfache Weise möglich wird. Ggf. kann es erforderlich sein, den elektrischen Verbraucher darauf vorzubereiten, dass plötzlich weniger oder gar keine Leistung mehr zur Verfügung steht. Hierzu kann der Verbraucher entsprechend vorbereitet oder auch ausgewählt werden.

Erfindungsgemäß ist der elektrische Verbraucher eine Umwandlungsvorrichtung zum Umwandeln elektrischer Leistung in eine andere Energieform, insbesondere ist der Verbraucher eine Umwandlungsvorrichtung, die ein Gas oder eine Flüssigkeit als Energieträger erzeugt. Bspw. kann durch Elektrolyse Wasserstoff erzeugt werden. Weiterhin bzw. ergänzend kann durch einen Methanisierungsprozess Methan erzeugt und in ein Gasnetz und/oder einen Gasspeicher eingespeist werden. Damit ist ein Verbraucher vorhanden, der sowohl eine große Menge elektrischer Leistung abnehmen kann, je nach Dimensionierung dieser Umwandlungsvorrichtung, und der auch ohne Weiteres in seiner Leistung reduziert werden kann. Wird die Eingangsleistung einer solchen Umwandlungsvorrichtung reduziert, produziert sie entsprechend weniger Gas oder ggf. gar kein Gas. Dieser Zustand kann im Grunde beliebig lange anhalten.

Eine Reduzierung der der Umwandlungsvorrichtung zugeführten elektrischen Leistung kann in kürzester Zeit erfolgen, bspw. innerhalb weniger ms. Selbst wenn die Umwandlungsvorrichtung mehr Zeit benötigt, um die Gasproduktion abzusenken oder abzuschalten, kann hierfür ein entsprechender Zwischenspeicher vorgesehen sein.

Erfindungsgemäß wird vorgeschlagen, dass von der erzeugten elektrischen Leistung der Windenergieanlage ein dritter Teil einem elektrischen Speicher zugeführt wird. Grundsätzlich ist zwar auch denkbar, dass in diesem Fall der zweite Teil den Wert 0 beträgt, vorzugsweise soll die elektrische Leistung gemäß dieser Ausführungsform aber in drei Teile aufgeteilt werden, die unterschiedliche Werte aufweisen können. Der erste Teil wird dabei ins Versorgungsnetz eingespeist, der zweite Teil wird für den Verbraucher, der eine Umwandlungsvorrichtung ist, verwendet und der dritte Teil wird zum Laden eines elektrischen Speichers verwendet.

Abhängig des wenigstens eines überwachten Netzzustandes, insbesondere, wenn von einem entsprechenden Bedarf des Versorgungsnetzes ausgegangen wird, oder dieser zu erwarten ist, kann elektrische Leistung aus dem elektrischen Energiespeicher entnommen und in das elektrische Versorgungsnetz eingespeist werden. Zusätzlich oder alternativ wird auch der dritte elektrische Teil, der zum Laden des Energiespeichers verwendet wird, abhängig von einem oder mehreren erfassten relevanten Netzzuständen zur Einspeisung in das Versorgungsnetz verändert. Somit kann in sehr kurzer Zeit die eingespeiste elektrische Leistung um den zweiten und den dritten Teil erhöht werden, so dass in sehr kurzer Zeit eine Umschaltung derart erfolgen kann, dass die gesamte von der Windenergieanlage oder von den mehreren Windenergieanlagen erzeugte elektrische Leistung in das Versorgungsnetz eingespeist wird. Um darüber hinaus noch eine Leistungserhöhung zumindest kurzzeitig beim Einspeisen zu erreichen, kann in dem elektrischen Speicher zwischengespeicherte elektrische Energie verwendet werden, um die eingespeiste Leistung noch über die jeweils aktuell durch die Windenergieanlage bzw. Windenergieanlagen verfügbare Leistung zu erhöhen.

Dieser Fall kann insbesondere für kurzzeitige Ausnahmesituationen vorgesehen sein.

Eine solche Ausnahmesituation kann sich aus Messungen im Netz ergeben, oder eine Situation kann auch vorher bekannt sein, bspw. wenn eine Industrieanlage einen großen Verbraucher zu einem bekannten Zeitpunkt einschaltet und dadurch eine kurzzeitige Leistungsbedarfsspitze erzeugt.

Es ist klar, dass das Einspeisen des dritten Teils der erzeugten Leistung in den elektrischen Speicher nicht dauerhaft mit hoher Leistung erfolgen kann. Vorzugsweise wird der elektrische Energiespeicher so gesteuert bzw. wird der dritte Teil der erzeugten elektrischen Leistung so eingestellt, dass der elektrische Speicher immer voll geladen ist, um möglichst viel Reserveleistung verfügbar zu haben. Der elektrische Energiespeicher kann aber auch dazu verwendet werden, seine Energie nicht lediglich in Ausnahmesituationen bereitzustellen, sondern damit ganz generell auf einen schwankenden Netzbedarf einzugehen oder Schwankungen des Windes auszugleichen.

Das Umleiten des zweiten Teils der Leistung bzw. eines Teils davon zur Einspeisung schafft insbesondere eine schnelle Möglichkeit, auf einen sprunghaften Leistungsbedarf zu reagieren, oder sogar in einem Fehlerfall netzstützend zu wirken, sofern einem solchen Fehlerfall mit einer erhöhten Leistungseinspeisung begegnet werden kann. Diese Umleitung des zweiten Teils der Leistung ist insbesondere sehr schnell möglich, weil die notwendige elektrische Leistung bereits als elektrische Energie bereitsteht.

Gleichzeitig kann das Umleiten dieses zweiten Teils auch so variabel erfolgen, dass eine Verstetigung der Einspeisung elektrischer Leistung ins Netz erfolgt. Mit anderen Worten kann erreicht werden, dass eine konstante Leistung trotz schwankenden Windes in das elektrische Netz eingespeist wird. Es ist somit eine Verstetigung der Einspeisung möglich. Bereits eine solche Verstetigung kann sich vorteilhaft auf die Netzstabilität auswirken, weil die Einspeisung gleichmäßig erfolgt und damit einhergehend auch unerwartete Schwankungen vermieden werden. Mit anderen Worten kann solchen Bedenken begegnet werden, die in Windenergieanlagen ein Problem für die Netzstabilität sehen, weil die theoretische Gefahr besteht, dass plötzlich unkoordiniert sehr viele Windenergieanlagen zugleich weniger Leistung oder zugleich mehr Leistung einspeisen, was im Extremfall zu einem Netzkollaps führen soll. Obgleich diese Bedenken - je nach verwendeten Windenergieanlagen - unbegründet sein dürften, zumindest aber kein so großes Problem darstellen, wie es häufig gesehen wird, kann die vorgeschlagene Verstetigung solche Bedenken ausräumen.

Die Verwendung des elektrischen Speichers kann ebenfalls eine solche Verstetigung fördern und zusätzlich eine Erhöhung der einspeisbaren Leistung über die vorherrschende Windleistung und damit grundsätzlich auch über die Nennleistung der involvierten Windenergieanlage bzw. Windenergieanlagen hinausgehen.

Das Überwachen wenigstens eines Netzzustandes kann erfindungsgemäß das Überwachen der Frequenz im elektrischen Versorgungsnetz sein oder beinhalten. Die Frequenz im Versorgungsnetz kann insbesondere ein Indikator für den Leistungsbedarf im Netz darstellen. Steigt die Frequenz gegenüber der Nennfrequenz, also bspw. 50 Hz im europäischen Verbundnetz oder 60 Hz im US-amerikanischen Netz, ist dies ein Indikator für ein Überangebot an

Leistung im Netz. Sinkt die Frequenz, insbesondere unter eine nominale insbesondere die Nennfrequenz des Netzes, so ist dies ein Indikator für einen Überbedarf an elektrischer Leistung im Netz. Vorzugsweise wird somit vorgeschlagen, den zweiten und/oder den dritten Teil der Leistung ganz oder teilweise zum Einspeisen umzuleiten, von einem Sinken der Frequenz im Netz unter einen vorbestimmten Grenzwert abhängig zu machen.

Alternativ kann die Spannung im elektrischen Versorgungsnetz überwacht werden, nämlich ihrer Amplitude nach. Insbesondere wird hier die Amplitude des Effektivwertes der Spannung oder eines ähnlich repräsentativen Wertes der Spannung verwendet. Es kann das beschriebene ganz oder teilweise Umleiten des zweiten und/oder dritten Teils der Leistung davon abhängig gemacht werden, ob die Spannung im elektrischen Versorgungsnetz unter einen vorbestimmten Spannungsgrenzwert abfällt.

Das beschriebene Umleiten kann auch quantitativ von dem überwachten Netzzustand abhängen. Vorzugsweise wird umso mehr Leistung zum Einspeisen umgeleitet, je weiter die Frequenz im elektrischen Versorgungsnetz, nämlich die sog. Netzfrequenz, unter einen vorbestimmten Grenzwert abfällt. Weiter vorzugsweise wird umso mehr elektrische Leistung zum Einspeisen umgeleitet, je weiter die Spannung im elektrischen Versorgungsnetz, nämlich die sog. Netzspannung, unter einen vorbestimmten Spannungsgrenzwert abfällt. Sowohl im geschilderten frequenzabhängigen Vorschlag als auch beim beschriebenen spannungsabhängigen Vorschlag kann die Umleitung der Leistung linear mit weiter fallender Frequenz bzw. weiter fallender Spannung bis zu einem Grenzwert ansteigen.

Vorzugsweise bzw. ergänzend wird der Netzzustand dadurch überwacht, dass ein externes Signal ausgewertet wird. Ein solches externes Signal ist insbesondere eines, das der Betreiber des Versorgungsnetzes, der sog. Netzbetreiber, übermittelt. Hierdurch können bspw. andere Verhalten anderer Erzeuger im Netz mit berücksichtig werden. Hierdurch kann insbesondere vermieden werde, dass mehrere Erzeuger im Netz, von denen die Einspeiseanordnung einen Erzeuger bilden kann, in ihrer Regelung gegeneinander arbeiten. Weiterhin kann durch die Berücksichtigung eines Signals des Netzbetreibers auch ein zukünftiges Ereignis berücksichtigt werden, wie bspw. das geplante Zu- oder Abschalten eines Erzeugers oder Verbrauchers.

Weiter vorzugsweise oder ergänzend wird vorgeschlagen, dass zum Überwachen wenigstens eines Netzzustandes ein aktueller Bedarf elektrischer Leistung des Versorgungsnetzes ermittelt wird, insbesondere ein Überbedarf, also mehr Bedarf als jeweils von den Erzeugern im Versorgungsnetz gerade bereitgestellt wird. Wie beschrieben, kann dies mit Hilfe der Überwachung der Frequenz erfolgen. Weitere Möglichkeiten bestehen darin, dass konkrete Verbrauchsmessungen, die ganz oder teilweise von den Verbrauchern selbst durchgeführt werden können, vorgenommen werden. Insbesondere wird hiermit auch die Möglichkeit berücksichtigt, dass zukünftig die Verbraucher und Erzeuger eines Netzes stärker informationstechnisch vernetzt sein könnten und entsprechend ihren Bedarf bzw. ihr Angebot planen und auch kommunizieren. Solche Informationen können von der Einspeiseanordnung ausgewertet werden. Vorzugsweise wird aber davon ausgegangen, dass für Verbrauchergruppen oder alle Verbraucher eine Vorauswertung stattfindet und lediglich das Ergebnis einer solchen Auswertung als Bedarf an die Einspeiseanordnung übermittelt wird und entsprechend als ein Netzzustand berücksichtigt werden kann.

Weiter wird vorgeschlagen, als Netzzustand eine Änderung der Frequenz des elektrischen Versorgungsnetzes, also eine Änderung der Netzfrequenz zu überwachen. Insbesondere eine schnelle bzw. unerwünscht schnelle Änderung der Netzfrequenz kann ein Indikator nicht nur für einen Überbedarf oder ein Überangebot sein, sondern für einen drohenden kritischen Netzzustand. Bspw. kann eine schnell abfallende Netzfrequenz ein Indikator für eine alarmierende Leistungsbedarfszunahme im Netz sein. Insbesondere ein schneller Abfall der Netzfrequenz kann ein schnelles Umleiten der Leistung zum Einspeisen erforderlich machen. Bspw. kann durch eine Umschaltung der zweite Teil der erzeugten Leistung und/oder der dritte Teil der erzeugten Leistung sofort und vollständig zum Einspeisen zur Verfügung gestellt werden. Es ist somit in äußerst kurzer Zeit ein erheblicher Anteil zusätzlicher Leistung zum Einspeisen verfügbar, der zudem dauerhaft eingespeist werden kann.

Vorzugsweise wird ein Grenzwert für eine Frequenzänderung vorgegeben und vorgeschlagen, dass ein Umleiten des zweiten und/oder dritten Teils der erzeugen elektrischen Leistung zum Einspeisen in das Versorgungsnetz dann eingeleitet wird, wenn eine negative Änderung der Frequenz, also ein Frequenzabfall, diesen Grenzwert unterschreitet, wenn also sein Betrag den Betrag dieses Grenzwertes überschreitet.

Vorzugsweise können zwei oder mehrere dieser nicht abschließend genannten Vorschläge zur Überwachung der Netzzustände kombiniert werden. Bspw. wird vorgeschlagen, dass ein bestimmter Frequenzabfall noch toleriert werden kann, wenn der absolute Wert der Frequenz noch hoch liegt, insbesondere über einem nominalen Wert, insbesondere über der Nennfrequenz liegt. Beträgt die Netzfrequenz aber diesen nominalen Wert, insbesondere Nennfrequenz, oder liegt darunter, kann derselbe Frequenzabfall zum Auslösen der beschriebenen Umleitung der Leistung zum Einspeisen führen. Ebenfalls kann auch die Auswertung der Netzspannung und/oder die Auswertung der Netzfrequenz und/oder die Auswertung der Netzfrequenzänderung zu unterschiedlichen Ergebnissen für die Umleitung der Leistung führen, bspw. abhängig davon, ob der Netzbetreiber über ein Signal bereits entsprechende Gegenmaßnahmen ankündigt, die ein vermeintlich erkanntes Problem bereits beheben. Zu einem anderen Ergebnis kann die Auswertung kommen, wenn der Netzbetreiber ein Signal übermittelt, das noch zu einer Erhöhung des erkannten Problems führen dürfte. Ebenso kann die Berücksichtigung einer insbesondere aktuellen Bedarfsanalyse der Verbraucher das Ergebnis der Auswertung des Netzzustandes beeinflussen. Ist es ist bspw. bekannt, dass ein großer Verbraucher sich vom Netz abschaltet, kann zunächst von einer zusätzlichen Einspeisung elektrischer Leistung abgesehen werden.

Eine Ausführungsform schlägt vor, dass der dem Verbraucher zugeführte zweite Teil der erzeugten elektrischen Leistung vollständig zum ersten, in das elektrische Versorgungsnetz eingespeisten Teil der elektrischen Leistung ergänzt wird, insbesondere so, dass der zweite Teil der erzeugten elektrischen Leistung durch einen Umschaltvorgang so umgeleitet wird, dass er zusammen mit dem ersten Teil zur Einspeisung in das elektrische Versorgungsnetz bereitsteht. Zusätzlich oder alternativ kann der dem elektrischen Speicher zugeführte dritte Teil der erzeugten elektrischen Leistung vollständig zum ersten in das elektrische Versorgungsnetz eingespeisten Teil der elektrischen Leistung ergänzt werden.

Vorzugsweise erfolgt das ganze oder teilweise Umleiten des zweiten und/oder dritten Teils der elektrischen Leistung so, dass die Leistung in einen Gleichspannungszwischenkreis eines Wechselrichters, der das Einspeisen in das elektrische Netz im Grunde ausführt, eingeleitet wird. Die Einspeiseanordnung ist so aufgebaut, dass die Windenergieanlage elektrische Leistung erzeugt und diese gleichrichtet und als Gleichspannung bereitstellt. Von dieser Gleichspannung aus erfolgt zunächst die Aufteilung in den ersten, zweiten und/oder dritten Teil der Leistung. Der erste Teil der Leistung wird in dieser Form, nämlich als Gleichspannung dem Gleichspannungszwischenkreis zur Verfügung gestellt und der Wechselrichter erzeugt die einzuspeisende Leistung entsprechend nach Frequenz, Phase und Amplitude.

Wird nun der zweite und/oder der dritte Teil der Leistung zum Einspeisen umgeleitet, erfolgt dies im Grunde so, dass der jeweilige Teil von der gesamten als Gleichspannung zur Verfügung gestellten elektrischen Leistung der Windenergieanlage nicht mehr oder nicht mehr vollständig entnommen wird und somit unmittelbar in dem Gleichspannungszwischenkreis zur Verfügung steht und eingespeist werden kann. Mit anderen Worten schlägt eine Ausführungsform vor, dass das Umleiten des zweiten und/oder dritten Teil der elektrischen Leistung einfach dadurch erfolgt, dass dieser zweite und dritte Teil nicht mehr entnommen wird und vielmehr die gesamte von der Windenergieanlage bereitgestellte elektrische Leistung unmittelbar vollständig in den Gleichspannungszwischenkreis fließt und zur Einspeisung bereitsteht.

Damit wird auch klar, dass die Erhöhung der eingespeisten elektrischen Leistung spontan und einfach erfolgen kann, weil der einspeisende Wechselrichter normal weiter arbeitet, nur sofort mehr elektrische Leistung zum Einspeisen verfügbar hat. Es muss insoweit lediglich die Vorkehrung getroffen werden, dass der Wechselrichter, der auch aus mehreren einzelnen Wechselrichtern gebildet werden kann, die vorzugsweise über den Gleichspannungszwischenkreis gekoppelt sind, für das Einspeisen der gesamten durch die Windenergieanlage oder Windenergieanlagen maximal erzeugbaren Leistung ausgelegt sein muss.

Weiterhin wird eine Einspeiseanordnung zum Einspeisen elektrischer Leistung in ein elektrisches Versorgungsnetz gemäß Anspruch 8 vorgeschlagen. Diese Einspeiseanordnung umfasst wenigstens eine Windenergieanlage zum Erzeugen elektrischer Leistung, wenigstens ein Einspeisemittel zum Einspeisen wenigstens eines ersten Teils der von der Windenergieanlage erzeugten elektrischen Leistung, insbesondere einen Wechselrichter, einen elektrischen Verbraucher zum Verbrauchen wenigstens eines zweiten Teils der von der Windenergieanlagen erzeugten elektrischen Leistung und eine Steuereinrichtung zum Steuern der Einspeiseanordnung und insbesondere auch zum Steuern eines Leistungsflusses.

Die Steuereinrichtung ist dazu vorbereitet, ein Verfahren gemäß wenigstens einer der oben beschriebenen Ausführungsformen umzusetzen. Eine solche Vorbereitung zum Umsetzen des Steuerfahrens kann darin bestehen, dass die Steuereinrichtung mit dem Wechselrichter und einer Umschalt- oder Umleiteinrichtung gekoppelt ist. Die

Steuereinrichtung kann die Umschalt- oder Umleiteinrichtung so ansteuern, dass wahlweise ein zweiter Teil der erzeugten elektrischen Leistung ganz oder teilweise von der wenigstens einen Windenergieanlage kommend zum Verbraucher oder zum Wechselrichter geleitet wird. Vorzugsweise verfügt die Steuereinrichtung über eine entsprechende Auswerteeinheit, die ganz oder teilweise Teil eines gemeinsamen Steuerprogramms sein kann, und die entsprechend die Auswertung wenigstens eines Netzzustandes durchführt.

Der elektrische Verbraucher ist eine Umwandlungsvorrichtung zum Umwandeln der elektrischen Leistung, nämlich des zweiten ihr zugeführten Teils der elektrischen Leistung, in eine andere Energieform. Insbesondere wird als dieser elektrische Verbraucher eine Umwandlungsvorrichtung vorgeschlagen, die ein Gas, wie Wasserstoff und/oder Methan oder eine Flüssigkeit, mit Hilfe der ihr zugeführten elektrischen Leistung erzeugt.

Es wird vorgeschlagen, dass die Einspeiseanordnung einen elektrischen Speicher zum Speichern eines dritten Teils der von der Windenergieanlage erzeugenden elektrischen Leistung aufweist und/oder dass die Einspeiseanordnung einen Wechselrichter mit einem Gleichspannungszwischenkreis aufweist, der das Einspeisen des ersten Teils der elektrischen Leistung und damit ggf. der gesamten von der Windenergieanlage erzeugten elektrischen Leistung in das elektrische Versorgungsnetz im Wesentlichen durchführt. Selbstverständlich können zum Einspeisen noch weitere Komponenten wie bspw. Netzdrossel vorgesehen sein, was dem Fachmann geläufig ist.

Erfindungsgemäß wird weiterhin ein Windpark vorgeschlagen, der mehrere Windenergieanlagen und eine Einspeiseanordnung wie gemäß einem der oben beschriebenen Ausführungsbeispiele aufweist. Der Windpark umfasst somit mehrere Windenergieanlagen, wenigstens ein Einspeisemittel wie einen Wechselrichter und einen Verbraucher, insbesondere eine Umwandlungsvorrichtung. Mit diesem Windpark kann somit eine große Menge elektrischer Leistung erzeugt werden. Je nach Anzahl und Größe der Windenergieanlagen kann der Windpark insgesamt sogar die Größenordnung eines Großkraftwerks annehmen. Dieser wird vorzugsweise mit einem entsprechend großen Verbraucher, insbesondere mit einer Umwandlungsvorrichtung kombiniert betrieben, die einen großen Anteil der erzeugten elektrischen Leistung, vorzugsweise über 5 % der Nennleistung des Windparks, über 10 %, über 20 % oder vorzugsweise über 50 % der Nennleistung des Windparks insbesondere zum Erzeugen eines Gases wie Wasserstoff oder Methan abnehmen kann.

Es wird, sowohl im Zusammenhang mit dem vorgeschlagenen Windpark, als auch im Zusammenhang mit nur einer oder wenigen Windenergieanlagen, darauf hingewiesen, dass es zwar wünschenswert ist, dass die Umwandlungsvorrichtung den zugeführten zweiten Teil der elektrischen Leistung möglichst verlustfrei in einen anderen Energieträger wie Wasserstoff oder Methan umwandelt, dass ein Grundgedanke der Erfindung davon aber nicht abhängt. Hierbei ist zu berücksichtigen, dass heutzutage die Netzstabilität einen hohen Stellenwert einnimmt, der gewisse Verluste erzeugter elektrischer Leistung rechtfertigt. Es kommt hinzu, dass die Umwandlungsvorrichtung insbesondere dann betrieben wird, wenn im Netz nur ein geringer Bedarf an elektrischer Leistung besteht, also bspw. in der Nacht. Ein solcher geringer Leistungsbedarf führt aber regelmäßig auch zu einem geringeren Strompreis, so dass eine Umwandlung mit schlechtem Wirkungsgrad zu Zeiten niedrigen Strompreises trotzdem zu einem positiven Gesamtergebnis führen kann, wenn eine Rückwandlung der anderen Energieform zu Zeiten hohen Bedarfs und damit hohen Strompreises erfolgt. Oder wenn die Energie wieder zu Preisen bereitgestellt wird, die hoch liegen, so dass ein etwaiger Verlust durch einen schlechten Wirkungsgrad somit gemindert wird oder im optimalen Fall nicht auftritt.

Besonders wichtig ist jedoch, dass im Falle des Anstiegs des Leistungsbedarfs im Netz, insbesondere im Falle eines schnellen oder sogar sprunghaften Anstiegs des Leistungsbedarfs im Netz die Erfindung eine Möglichkeit der sofortigen Erhöhung der eingespeisten Leistung ermöglicht.

Die Erfindung wird nun nachfolgend exemplarisch anhand von Ausführungsbeispielen unter Bezugnahme auf die begleitenden Figuren näher erläutert.
- Fig. 1: zeigt eine Windenergieanlage in einer schematischen Ansicht.
- Fig. 2: zeigt eine Einspeiseanordnung schematisch in einer vereinfachten Übersicht.
- Fig. 3: zeigt ein Diagramm zur Veranschaulichung von Leistungsaufteilungen.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

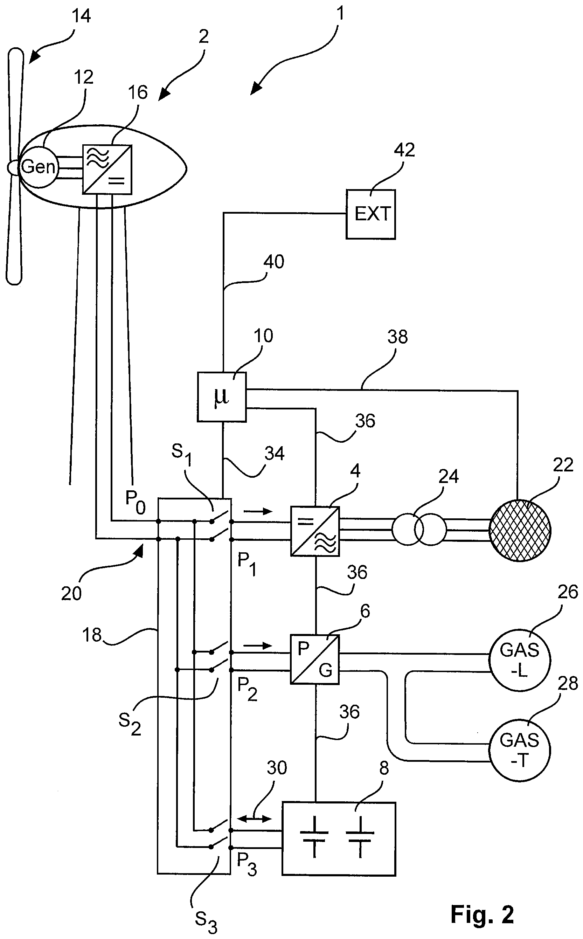

Fig. 2 zeigt eine Einspeiseanordnung 1 mit einer Windenergieanlage 2, einem Einspeisemittel 4, einem elektrischen Verbraucher 6, der hier als Umwandlungsvorrichtung 6 ausgebildet ist, einem elektrischen Speicher 8 und einer Steuereinrichtung 10, die hier als Mikrocontroller 10 veranschaulicht ist.

Im Betrieb gemäß einem Betriebsmodus, bei dem nämlich ausreichend Wind vorhanden ist, erzeugt die Windenergieanlage 2 durch den Generator 12, der vom Wind über den aerodynamischen Rotor 14 angetrieben wird, eine elektrische Wechselspannung. Diese erzeugte Wechselspannung wird einem Gleichrichter 16 zugeführt, der daraus eine Gleichspannung erzeugt, die einem Verteilungsblock 18 zugeführt wird. Dieser Verteilungsblock 18 ist insbesondere als symbolische Darstellung der nachfolgend beschriebenen Leistungsaufteilung zu verstehen. In der praktischen Umsetzung kann die Leistungsverteilung, die mit diesem Verteilungsblock 18 veranschaulicht werden soll, auch ohne körperliche Ausgestaltung eines solchen Verteilungsblocks 18 auskommen.

Die Fig. 2 veranschaulicht jedenfalls mit dem Verteilungsblock 18, dass diesem zunächst die gesamte von der Windenergieanlage 2 erzeugte elektrische Leistung zugeführt wird. Etwaige Verluste, die bspw. im Gleichrichter 16 auftreten können, werden hier vernachlässigt. Somit steht am Verteilungseingang 20 die gesamte erzeugte elektrische Leistung P₀ der Windenergieanlage 2 zur Verfügung. Diese gesamte elektrische Leistung P₀ wird nun aufgeteilt in den ersten Teil bzw. die erste Teilleistung P₁, den zweiten Teil bzw. die zweite Teilleistung P₂ und den dritten Teil bzw. die dritte Teilleistung P₃. Entsprechend gilt die Gleichung P₀=P₁+P₂+P₃. Zunächst wird davon ausgegangen, dass die erste, zweite und dritte Teilleistung P₁, P₂ und P₃ jeweils ungleich 0 sind und entsprechend sind die symbolisch gezeigten, der jeweiligen Teilleistung zugeordneten ersten, zweiten und dritten Teilschalter S₁, S₂ und S₃ geschlossen.

Somit wird die erste Teilleistung P₁ dem Einspeisemittel 4, nämlich dem Wechselrichter 4, zugeführt. Der Wechselrichter 4 erzeugt hierzu einen entsprechenden Wechselstrom zum Einspeisen in das elektrische Versorgungsnetz 22, das nachfolgend vereinfachend auch als Netz 22 bezeichnet wird. Im gezeigten Beispiel der Fig. 2 ist zudem ein Transformator 24 eingezeichnet, der die durch den Wechselrichter 4 erzeugte Wechselspannung auf einen höheren Spannungswert transformieren kann, wenn bspw. in ein Mittelspannungsnetz eingespeist wird. Auf diesen Transformator 24 kommt es nicht wesentlich an, er veranschaulicht aber, dass die Einspeiseanordnung 1 und damit die Windenergieanlage 2 nicht nur in ein Niederspannungsnetz, das regelmäßig auch ein kleines Netz ist, sondern bspw. auch in ein Mittelspannungsnetz und damit ein entsprechend großes Netz einspeisen kann. Grundsätzlich kommt aber auch die Einspeisung in ein Hochspannungsnetz in Betracht, insbesondere dann, wenn ein Windpark mit hoher Leistung vorgesehen ist und auch abhängig von der vorgefundenen Netztypologie am Aufstellungsort.

Die zweite Teilleistung P₂ wird der Umwandlungsvorrichtung 6 zugeführt, die damit ein Gas erzeugen bzw. umwandeln kann, das in ein Gasnetz oder dergleichen eingespeist werden kann. Repräsentativ hierfür wird veranschaulichend ein Gasnetz oder Gasleitung 26 als GAS-L bezeichnet und ein Gasspeicher oder Gastank 28 als GAS-T bezeichnet. Grundsätzlich kann ein Gasspeicher 28 bzw. viele Gasspeicher Teil des Gasnetzes 26 sein.

Die dritte Teilleistung P₃ wird einem elektrischen Speicher 8 zugeführt, um diesen aufzuladen. Der elektrische Speicher 8 ist hier als Batteriespeicher symbolisiert, der mehrere Speicherbänke aufweisen kann. Es kommen aber auch andere Speicher in Betracht, wie bspw. Kondensatorenbänke, die zumindest ergänzend vorgesehen sein können. Die dritte Teilleistung P₃ kann auch grundsätzlich negative werden, demnach Energie aus dem elektrischen Speicher 8 entnommen wird. Dies wird durch den Doppelpfeil 30 veranschaulicht, wohingegen ein einfacher Pfeil 32 sowohl für die erste Leistung P₁ als auch die zweite Leistung P₂ veranschaulicht, dass die Leistung jeweils nur zum Wechselrichter 4 bzw. zur Umwandlungsvorrichtung 6 hinfließt, wenngleich die Umwandlungsvorrichtung 6 grundsätzlich auch in bidirektionale Richtung ausgeführt sein kann.

Der Wechselrichter 4 ist zudem vorzugsweise FACTS-fähig und/oder kann Aufgaben eines STATCOM ausführen. Beide Abkürzungen sind im Bereich der Netztechnik bekannt und bedeuten:
FACTS: Flexible AC-Transmission-System
STATCOM: Static Synchronous Compensator

Somit ist der Wechselrichter 4 dazu vorbereitet, nicht nur elektrische Leistung in das elektrische Versorgungsnetz 22 einzuspeisen, sondern auch qualitativ Einfluss zu nehmen, insbesondere durch Beeinflussen des Phasenwinkels der eingespeisten Leistung. An dieser Stelle ist noch zu erwähnen, dass die Erfindung grundsätzlich von einem elektrischen Versorgungsnetz ausgeht, das kein Inselnetz darstellt. Für Inselnetze bestehen besondere Voraussetzungen, insbesondere hinsichtlich Frequenzvorgaben und Indikatoren sowie Eingriffsmöglichkeiten hinsichtlich Netzstabilität.

Zur Steuerung des Wechselrichters 4, der Umwandlungsvorrichtung 6, des elektrischen Speichers 8 und des Verteilungsblocks 18 bzw. dessen Funktionalität ist die Steuereinrichtung 10 vorgesehen. Die Steuereinrichtung 10 stellt dabei eine übergeordnete Steuerung bereit, die insbesondere dem Wechselrichter 4, der Umwandlungsvorrichtung 6 und dem elektrischen Speicher 8 übergeordnete Regelungs- bzw. Steuerungsziele vorgibt, insbesondere hinsichtlich der Leistungsaufteilung. Insbesondere der konkrete Wert der ersten Teilleistung P₁, der zweiten Teilleistung P₂ und der dritten Teilleistung P₃ kann jeweils von einer internen Steuerung oder Regellung des Wechselrichters 4, der Umwandlungsvorrichtung 6 und des elektrischen Speichers 8 umgesetzt werden. Der Verteilungsblock 18 kann ggf. die Schalterstellung der drei Schalter S₁, S₂ und S₃ steuern.

Für diese übergeordnete Steuerung kann die Steuereinrichtung 10 eine der Steuerleitungen 34 oder 36 verwenden. In der Fig. 2 reicht die erste Steuerleitung 34 zum Verteilungsblock 18 und die zweite Steuerleitung 36 reicht zum Wechselrichter 4 und wird von dort weiter durchgeschleift zur Umwandungsvorrichtung 6 und zum elektrischen Speicher 8. Die konkrete Typologie der Steuerleitungen kann im Grunde beliebig und in ansonsten bekannter Weise unter Verwendung bekannter Topologien umgesetzt werden.

Zum Erfassen wenigsten seines Netzzustandes des Versorgungsnetzes 22 ist zudem eine Netzdatenleitung 38 vorgesehen, über die die Steuereinrichtung bspw. Informationen wie Frequenz- und Spannungsamplitude der Netzspannung des Netzes 22 erhält. Über eine Eingabedatenleitung 40 können weitere Daten der Steuereinrichtung 10 zugeführt werden, insbesondere Daten einer externen Einheit wie bspw. eines Netzbetreibers oder einer zentralen Auswerteeinheit zum Auswerten des aktuellen Verbraucherbedarfs. Repräsentativ für solche und weitere externe Auswerteeinheiten ist der Block 42 eingezeichnet und mit EXT repräsentativ für eine externe Einheit bezeichnet.

Grundsätzlich können die erste und zweite Steuerleitung 34, 36, die Netzdatenleitung 38 und die Eingabedatenleitung 40 unterschiedliche Signale übertragen und die Steuereinrichtung 10 kann hierdurch Signale sowohl empfangen als auch aussenden. Dabei ist die primäre Informationsrichtung der ersten und zweiten Steuerleitung 34, 36 von der Steuereinrichtung 10 zu den jeweils angeschlossenen Einrichtungen, nämlich dem Wechselrichter 4, der Umwandlungsvorrichtung 6, dem elektrischen Speicher 8 und dem Verteilungsblock 18. Bei der Netzdatenleitung 38 und der Eingabedatenleitung 40 ist die Informationsrichtung insbesondere zur Steuereinrichtung 10 hin. Es können aber bspw. auch Informationen von dem Wechselrichter 4 der Steuereinrichtung 10 zugeführt werden. Diese Informationen können sowohl konkrete Zustände des Wechselrichters 4 darstellen, als auch ggf. Netzinformationen enthalten, wenn nämlich der Wechselrichter 4 selbst über entsprechende Messmittel für Netzzustände verfügt, was hier der Vollständigkeit halber erwähnt wird.

Stellt die Steuereinrichtung 10 nun fest, dass Bedarf für eine Leistungsumleitung, also eine Veränderung der Leistungsaufteilung der Teilleisung P₁, P₂ und P₃ vorliegt, so besteht zunächst die Möglichkeit, diese Information bzw. entsprechende Steuerbefehle an die betreffende Einheiten, nämlich insbesondere den Wechselrichter 4, die Umwandlungsvorrichtung 6, den elektrischen Speicher 8 und den Verteilungsblock 18, zu geben. Davon abhängig kann die Umwandlungsvorrichtung 6 ihre Leistung reduzieren, so dass sich die zweite Teilleistung P₂ reduziert, ggf. auf 0 reduziert. Entsprechend kann der elektrische Speicher 8 seine Leistungsaufnahme reduzieren, nämlich die Abnahme der dritten Teilleistung P₃ reduzieren, ggf. umkehren, so dass der elektrische Speicher Leistung abgibt.

Eine andere oder ergänzende Variante besteht darin, dass der Verteilungsblock 18 den zweiten Schalter S₂ öffnet und dann sofort die zweite Teilleistung P₂ auf 0 reduziert. Ebenfalls kann der dritte Schalter S₃ geöffnet werden, um die Leistung, die dem elektrischen Speicher 8 zugeführt wird, ebenfalls sofort auf 0 zu reduzieren. Es versteht sich von selbst, dass der erste Schalter S₁ hierbei geschlossen ist.

Um zusätzlich Energie aus dem elektrischen Speicher 8 zum Einspeisen zur Verfügung zu stellen, kann der dritte Schalter S₃ wieder geschlossen werden. Zum elektrischen Speicher ist zu erwähnen, dass dieser grundsätzlich im laufenden Betrieb im Gegensatz zur Umwandlungsvorrichtung 6 grundsätzlich keine oder wenig Leistung im Dauerbetrieb aufnimmt, schließlich kann der elektrische Speicher nur solange Leistung aufnehmen, bis er bis zu seinem Maximum geladen ist.

Der elektrischen Umwandlungsvorrichtung 6 kommt somit eine andere Bedeutung als dem elektrischen Speicher 8 zu und es wird somit eine entsprechende Handhabung vorgeschlagen. Demnach kann die Funktionsweise grundsätzlich an einem Konzept beschrieben werden, das zunächst den elektrischen Speicher 8 unberücksichtigt lässt. Bei dieser Betrachtung wäre der dritte Schalter S₃ geöffnet und die dritte Teilleistung P₃ = 0.

Die Umwandlungsvorrichtung 6 arbeitet vorzugsweise im Dauerbetrieb, indem sie bspw. etwa 50 % der von der Windenergieanlage 2 erzeugten elektrischen Leistung im Dauerbetrieb benötigt und kontinuierlich Gas oder einen anderen Energieträger erzeugt. In diesem Beispiel beträgt somit die zweite Teilleistung P₂ 50 % der insgesamt bereitgestellten elektrischen Leistung P₀. Entsprechend ist dann auch die erste Teilleistung P₁ 50 % der gesamten Leistung P₀. Wird vereinfachend - selbst wenn dies je nach Aufstellungsort der Windenergieanlage 2 der seltenere Fall ist - von Nennwind und somit Nennleistung ausgegangen, so kann bspw. eine 2MW Windenergieanlage 2 2MW Leistung als P₀ bereitstellen, von der ein 1MW als erste Teilleistung P₁ vom Wechselrichter 4 in das Netz 22 eingespeist wird. Gleichzeitig erhält die Umwandlungsvorrichtung 1MW zum Erzeugen des Gases. Aus Sicht des elektrischen Versorgungsnetzes 22 ist demnach eine 1MW Windenergieanlage vorhanden, die ins Netz einspeist.

Steigt nun der Bedarf elektrischer Leistung im Netz 22 plötzlich oder allmählich an, kann diese 1MW Stromquelle ihre Leistung erhöhen, nämlich im Beispiel auf bis zu 2MW. Tatsächlich findet aber keine Leistungserhöhung statt, weil die Windenergieanlage nachwievor 2MW erzeugt, aus Sicht des Netzes findet aber eine Leistungserhöhung statt. Diese Leistungserhöhung kann dabei dauerhaft vorgenommen werden, sei es für wenige Sekunde, wenige Minuten, wenige Stunden, Tage oder Wochen, denn die Umwandlungsvorrichtung 6 wird hierbei so konzipiert, dass auf die Gasproduktion oder andere Produktion jederzeit verzichtet werden kann oder diese jederzeit abgesenkt werden kann.

Außerdem kann der Wechselrichter 4 weiterhin das beispielhaft genannte 1MW ins Netz 22 einspeisen, wenn die Windgeschwindigkeit sinkt. Im genannten Beispiel kann die Windgeschwindigkeit soweit absinken, dass die Windenergieanlage 2 nur halbe Nennleistung erzeugt, nämlich 1MW. In diesem Fall kann immer noch 1MW Leistung von dem Wechselrichter 4 in das Netz 22 eingespeist werden, wenn nämlich der Umwandlungsvorrichtung 6 in diesem Fall keine Leistung mehr zugeführt wird.

Hierzu kann ergänzend der elektrische Speicher 8 verwendet werden, der insbesondere geeignet ist, für einen verhältnismäßig kurzen Zeitraum, je nach Dimensionierung der Speicherkapazität, elektrische Leistung zur Einspeisung zusätzlich zur Verfügung zu stellen.

Das beschriebene Konzept wird besonders einfach dadurch umsetzbar, dass die Leistungsverteilung, nämlich die Aufteilung der Gesamtleistung P_{0'} in die erste, zweite und dritte Teilleistung P₁, P₂ und P₃ auf der Gleichspannungsebene erfolgt und insbesondere dem Wechselrichter 4 direkt zu seinem Gleichspannungszwischenkreis zugegeben wird. Die Änderung der ersten Teilleistung P₁, die somit direkt in den Gleichspannungszwischenkreis des Wechselrichters 4 fließt, macht sich im Grunde nur dadurch bemerkbar, dass sich der in den Gleichspannungszwischenkreis fließende Strom erhöht. Die Spannung des Gleichspannungszwischenkreises kann im Wesentlichen gleich bleiben.

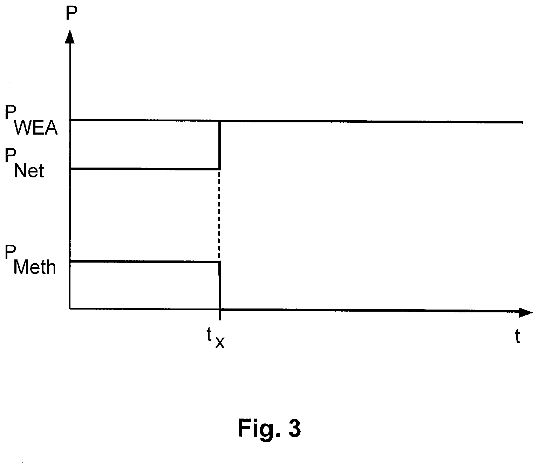

Das Diagramm der Fig. 3 stellt zur Veranschaulichung Leistungsverläufe P über die Zeit t dar. Hier wird exemplarisch von einer Einspeiseanordnung ausgegangen, die eine Windenergieanlage WEA und einen Verbraucher, nämlich eine Umwandlungsvorrichtung zum Erzeugen von Methan umfasst. Ein elektrischer Speicher ist für die hier betrachtete Ausführungsform nicht vorgesehen bzw. wird nicht berücksichtigt.

Das Diagramm geht von einer Situation aus, in der die Windenergieanlage im Wesentlichen eine konstante Leistung P_{WEA} erzeugt. Von dieser Leistung P_{WEA} wird zunächst ein erster Teil als P_{Net} in ein elektrisches Versorgungsnetz eingespeist und der verbleibende zweite Teil P_{Meth} wird der Umwandlungsvorrichtung zugeführt. Verluste werden hierbei vernachlässigt. Zum Zeitpunkt tₓ ergibt sich plötzlich ein erhöhter Bedarf an einzuspeisender Leistung P_{Net} und dafür wird der zweite Teil P_{Meth} reduziert, nämlich im gezeigten Beispiel auf null, so dass dieser Teil der eingespeisten Leistung P_{Net} zugegeben werden kann. P_{Net} erhöht sich entsprechend und steigt auf den Wert der erzeugten Leistung P_{WEA} an. Somit kann die eingespeiste Leistung P_{Net} durch das vorgeschlagene Verfahren sprunghaft auf diesen höheren Wert gesteigert werden. Diese erhöhte Leitsung P_{Net} kann auch längerfristig beibehalten werden, solange ausreichend Wind vorhanden ist.

## Patentansprüche

1. Verfahren zum Steuern einer Einspeiseanordnung (1) zum Erhöhen einer Einspeisung elektrischer Leistung der Einspeiseanordnung (1) in ein elektrisches Versorgungsnetz (22), wobei die Einspeiseanordnung (1) eine Windenergieanlage (2) mit einem Gleichrichter (16), einen elektrischen Verbraucher und einen elektrischen Speicher (8) aufweist, die über eine vom Gleichrichter (16) erzeugten Gleichspannung in einem Verteilungsblock (18) verbunden sind, wobei die Einspeiseanordnung (1) mittels eines Transformators (24) mit dem elektrischen Versorgungsnetz (22) verbunden ist,
umfassend die Schritte:
- Erzeugen elektrischer Leistung (P0) mit der Windenergieanlage (2) aus Wind,
- Einspeisen eines ersten Teils (P1) der erzeugten elektrischen Leistung (P0) in das elektrische Versorgungsnetz (22),
- Zuführen eines zweiten Teils (P2) der erzeugten elektrischen Leistung (P0) dem elektrischen Verbraucher (6) zum Verbrauchen des zugeführten zweiten Teils (P2) der erzeugten elektrischen Leistung (P0),
- Zuführen eines dritten Teils (P3) der erzeugten elektrischen Leistung (P0) dem elektrischen Speicher (8),
- wobei abhängig von wenigstens einem überwachten Netzzustandes der dem Verbraucher (6) zugeführte zweite Teil (P2) der erzeugten elektrischen Leistung (P0) ganz oder teilweise reduziert wird und der erste, in das elektrische Versorgungsnetz (22) eingespeiste Teil (P1) der elektrischen Leistung (P0) entsprechend erhöht wird,
wobei abhängig von wenigstens einem überwachten Netzzustandes der dem elektrischen Speicher (8) zugeführte dritte Teil (P3) der erzeugten elektrischen Leistung (P0) ganz oder teilweise reduziert wird und der erste, in das elektrische Versorgungsnetz (22) eingespeiste Teil (P1) der elektrischen Leistung (P0) entsprechend erhöht wird,
wobei der elektrische Verbraucher eine Umwandlungsvorrichtung (6) ist, zum Umwandeln der elektrischen Leistung (P2) in eine andere Energieform,
wobei der Verteilungsblock (18) zur Leistungsaufteilung auf einer Gleichspannungsebene dient,
wobei der Transformator eine Wechselspannung auf einen höheren Spannungswert transformiert, und
wobei das Überwachen wenigstens eines Netzzustandes eines der Liste umfasst:
- Überwachen der Frequenz im elektrischen Versorgungsnetz (22),
- Überwachen der Spannung im elektrischen Versorgungsnetz (22),
- Überwachen der Änderung der Frequenz des elektrischen Versorgungsnetzes (22).

2. Verfahren nach Anspruch 1,
**dadurch gekennzeichnet, dass**
der elektrische Verbraucher (6) eine Umwandlungsvorrichtung (6) ist, die ein Gas oder eine Flüssigkeit als Energieträger erzeugt.

3. Verfahren nach Anspruch 1 oder 2,
**dadurch gekennzeichnet, dass**
- abhängig des wenigstens einen überwachten Netzzustandes elektrische Leistung aus dem elektrischen Energiespeicher entnommen und in das elektrische Versorgungsnetz (22) eingespeist wird.

4. Verfahren nach einem der vorstehenden Ansprüche,
**dadurch gekennzeichnet, dass**
das Überwachen wenigstens eines Netzzustandes
- das Auswerten eines externen Signals oder
- das Ermitteln eines aktuellen Bedarfs elektrischer Leistung des Versorgungsnetzes (22) umfasst.

5. Verfahren nach einem der vorstehenden Ansprüche,
**dadurch gekennzeichnet, dass**
- der dem Verbraucher (6) zugeführte zweite Teil (P2) der erzeugten elektrischen Leistung (P0) vollständig zum ersten, in das elektrische Versorgungsnetz (22) eingespeisten Teil (P1) der elektrischen Leistung (P0) ergänzt wird, so, dass der zweite Teil (P2) der erzeugten elektrischen Leistung (P0) durch einen Umschaltvorgang so umgeleitet wird, dass er zusammen mit dem ersten Teil (P1) zur Einspeisung in das elektrische Versorgungsnetz (22) bereitsteht.

6. Verfahren nach einem der vorstehenden Ansprüche,
**dadurch gekennzeichnet, dass**
- der bzw. einer dem bzw. einem elektrischen Speicher (8) zugeführte dritte Teil (P3) der erzeugten elektrischen Leistung (P0) vollständig zum ersten, in das elektrische Versorgungsnetz (22) eingespeisten Teil (P1) der elektrischen Leistung (P0) ergänzt wird, so, dass der dritte Teil (P3) der erzeugten elektrischen Leistung (P0) durch einen Umschaltvorgang so umgeleitet wird, dass er zusammen mit dem ersten Teil (P1) zur Einspeisung in das elektrische Versorgungsnetz (22) bereitsteht.

7. Verfahren nach einem der vorstehenden Ansprüche,
**dadurch gekennzeichnet, dass**
die Einspeiseanordnung (1) einen Wechselrichter (4) mit einem Gleichspannungszwischenkreis aufweist und der erste und zweite Teil der elektrischen Leistung (P0) ganz oder teilweise so umgeleitet wird, dass er direkt in den Gleichspannungszwischenkreis eingeleitet wird.

8. Einspeiseanordnung (1) zum Einspeisen elektrischer Leistung (6) in ein elektrisches Versorgungsnetz (22), umfassend
- eine Windenergieanlage (2) zum Erzeugen elektrischer Leistung (P0),
- ein Einspeisemittel (4) zum Einspeisen wenigstens eines ersten Teils (P1) der von der Windenergieanlage (2) erzeugten elektrischen Leistung (P0) in das elektrische Versorgungsnetz (22),
- einen elektrischen Verbraucher (6) zum Verbrauchen wenigstens eines zweiten Teils (P2) der von der Windenergieanlage (2) erzeugten elektrischen Leistung (P0),
- einen elektrischen Speicher (8) zum Zuführen eines dritten Teils (P3) der von der Windenergieanlage (2) erzeugten elektrischen Leistung (P0) und
- eine Steuereinrichtung (10) zum Steuern der Einspeiseanordnung (1), zum Steuern eines Leistungsflusses,
wobei die Einspeiseanordnung (1) mittels eines Transformators (24) mit dem elektrischen Versorgungsnetz (22) verbunden ist,
wobei die Windenergieanlage über eine vom Gleichrichter (16) erzeugten Gleichspannung in einem Verteilungsblock (18) mit dem elektrischen Verbraucher (6) und dem elektrischen Speicher (8) verbunden ist und der Verteilungsblock (18) zur Leistungsaufteilung auf einer Gleichspannungsebene dient,
wobei der elektrische Verbraucher eine Umwandlungsvorrichtung (6) ist, zum Umwandeln der elektrischen Leistung (P2) in eine andere Energieform, wobei der Transformator eine Wechselspannung auf einen höheren Spannungswert transformiert, und
wobei die Steuereinrichtung (10) dazu eingerichtet ist, ein Verfahren nach einem der Ansprüche 1 bis 7 durchzuführen.

9. Einspeiseanordnung (1) nach Anspruch 8, umfassend einen Wechselrichter (4) mit einem Gleichspannungszwischenkreis zum Einspeisen des ersten Teils (P1) der elektrischen Leistung (P0) in das elektrische Versorgungsnetz (22).

10. Windpark umfassend mehrere Windenergieanlagen (2) und eine Einspeiseanordnung (1) nach einem der Ansprüche 8 und 9.

## Claims

1. Method for controlling a feed arrangement (1) for increasing a feed-in of electrical power of the feed arrangement (1) into an electrical supply network (22), the feed arrangement (1) having a wind energy installation (2) with a rectifier (16), an electrical load and an electrical store (8), which are connected via a DC voltage generated by the rectifier (16) in a distribution unit (18), the feed arrangement (1) being connected to the electrical supply network (22) by means of a transformer (24),
comprising the steps:
- generating electrical power (P0) using the wind energy installation (2) from wind,
- feeding a first proportion (P1) of the generated electrical power (P0) into the electrical supply network (22),
- supplying a second proportion (P2) of the generated electric power (P0) to the electric consumer (6) for consuming the supplied second proportion (P2) of the generated electric power (P0),
- supplying a third proportion (P3) of the generated electric power (P0) to the electric store (8),
wherein, depending on at least one monitored system state, the second proportion (P2) of the generated electrical power (P0) supplied to the consumer (6) is completely or partially reduced and the first proportion (P1) of the electrical power (P0) fed into the electrical supply network (22) is increased accordingly,
wherein, depending on at least one monitored network state, the third part (P3) of the generated electrical power (P0) supplied to the electrical storage device (8) is completely or partially reduced and the first part (P1) of the electrical power (P0) fed into the electrical supply network (22) is increased accordingly,
wherein the electrical load is a conversion device (6) for converting the electrical power (P2) into another form of energy,
wherein the distribution unit (18) is for power sharing on a DC voltage plane,
wherein the transformer transforms an AC voltage to a higher voltage value, and
wherein monitoring at least one network state of one of the list comprises:
- monitoring the frequency in the electrical supply network (22),
- monitoring the voltage in the electrical supply network (22),
- monitoring the change of frequency of the electrical supply network (22).

2. Method according to claim 1,
**characterized in that**
the electrical consumer (6) is a conversion apparatus (6) that generates a gas or a liquid as an energy form.

3. Method according to claim 1 or 2,
**characterized in that**
- depending on the at least one monitored system state, electrical power is drawn from the electrical energy storage device and fed into the electrical supply network (22).

4. Method according to any of the preceding claims,
**characterized in that**
the monitoring of at least one network condition
- the evaluation of an external signal or
- determining a current demand for electrical power of the supply network (22).

5. Method according to any of the preceding claims,
**characterized in that**
- the second proportion (P2) of the generated electrical power (P0) supplied to the consumer (6) is completely supplemented to the first proportion (P1) of the electrical power (P0) fed into the electrical supply network (22), such that the second part (P2) of the generated electrical power (P0) is diverted by a switching operation such that it is available together with the first proportion (P1) for fed into the electrical supply network (22).

6. Method according to any of the preceding claims,
**characterized in that**
- the or a third proportion (P3) of the generated electric power (P0) fed to the or an electric storage device (8) is completely supplemented to the first proportion (P1) of the electric power (P0) fed into the electric supply network (22), such that the third proportion (P3) of the generated electric power (P0) is diverted by a switching operation such that it is available together with the first proportion (P1) for feeding into the electric supply network (22).

7. Method according to any of the preceding claims,
**characterized in that**
the feed arrangement (1) comprises an inverter (4) with a DC voltage intermediate circuit and the first and second proportion of the electric power (P0) is completely or partially diverted in such a way that it is fed directly into the DC voltage intermediate circuit.

8. Feed arrangement (1) for feeding electrical power (6) into an electrical supply network (22), comprising
- a wind energy installation (2) for generating electrical power (P0),
- a feed means (4) for feeding at least a first proportion (P1) of the electrical power (P0) generated by the wind energy installation (2) into the electrical supply network (22),
- an electrical consumer (6) for consuming at least a second proportion (P2) of the electrical power (P0) generated by the wind energy installation (2),
- an electrical storage (8) for supplying a third proportion (P3) of the electrical power (P0) generated by the wind energy installation (2), and
- a control device (10) for controlling the feed arrangement (1), for controlling a power flow,
wherein the feed arrangement (1) is connected to the electrical supply network (22) by means of a transformer (24),
wherein the wind energy installation is connected to the electrical consumer (6) and the electrical storage (8) via a DC voltage generated by the rectifier (16) in a distribution block (18) and the distribution block (18) is used for power sharing on a DC voltage level,
wherein the electrical load is a conversion device (6) for converting the electrical power (P2) into another form of energy, the transformer transforming an AC voltage to a higher voltage value, and
wherein the control device (10) is adapted to perform a method according to any one of claims 1 to 7.

9. Feed arrangement (1) according to claim 8, comprising an inverter (4) with a DC voltage intermediate circuit for feeding the first proportion (P1) of the electrical power (P0) into the electrical supply network (22).

10. Wind farm comprising a plurality of wind energy installations (2) and a feed arrangement (1) according to any one of claims 8 and 9.

## Revendications

1. Procédé de commande d'un ensemble d'injection (1) pour augmenter une injection de puissance électrique de l'ensemble d'injection (1) dans un réseau d'alimentation électrique (22), dans lequel l'ensemble d'injection (1) présente une éolienne (2) avec un redresseur (16), un consommateur électrique et un accumulateur électrique (8), qui sont reliés dans un bloc de distribution (18) par l'intermédiaire d'une tension continue produite par le redresseur (16), dans lequel l'ensemble d'injection (1) est relié au réseau d'alimentation électrique (22) au moyen d'un transformateur (24),
comprenant les étapes :
- de production de puissance électrique (P0) avec l'éolienne (2) à partir du vent,
- d'injection d'une première partie (P1) de la puissance électrique (P0) produite dans le réseau d'alimentation électrique (22),
- d'acheminement d'une deuxième partie (P2) de la puissance électrique (P0) produite au consommateur électrique (6) pour la consommation de la deuxième partie (P2) acheminée de la puissance électrique (P0) produite,
- d'acheminement d'une troisième partie (P3) de la puissance électrique (P0) produite à l'accumulateur électrique (8),
- dans lequel la deuxième partie (P2) acheminée au consommateur (6) de la puissance électrique (P0) produite est réduite en totalité ou en partie en fonction d'au moins un état de réseau surveillé et la première partie (P1), injectée dans le réseau d'alimentation électrique (22), de la puissance électrique (P0) est augmentée de manière correspondante,
dans lequel la troisième partie (P3), acheminée à l'accumulateur électrique (8), de la puissance électrique (P0) produite est réduite en totalité ou en partie en fonction d'au moins un état de réseau surveillé et la première partie (P1), injectée dans le réseau d'alimentation électrique (22), de la puissance électrique (P0) est augmentée de manière correspondante,
dans lequel le consommateur électrique est un dispositif de conversion (6) pour convertir la puissance électrique (P2) en une autre forme d'énergie,
dans lequel le bloc de distribution (18) sert à répartir la puissance sur un niveau de tension continue,
dans lequel le transformateur transforme une tension alternative en une valeur de tension plus élevée, et
dans lequel la surveillance d'au moins un état de réseau comprend un élément de la liste :
- surveillance de la fréquence dans le réseau d'alimentation électrique (22),
- surveillance de la tension dans le réseau d'alimentation électrique (22),
- surveillance de la modification de la fréquence du réseau d'alimentation électrique (22).

2. Procédé selon la revendication 1,
**caractérisé en ce que**
le consommateur électrique (6) est un dispositif de conversion (6), qui produit un gaz ou un liquide en tant que source d'énergie.

3. Procédé selon la revendication 1 ou 2,
**caractérisé en ce que**
- de la puissance électrique est prélevée de l'accumulateur d'énergie électrique en fonction de l'au moins un état de réseau surveillé et est injectée dans le réseau d'alimentation électrique (22).

4. Procédé selon l'une quelconque des revendications précédentes,
**caractérisé en ce que**
la surveillance d'au moins un état de réseau comprend
- l'évaluation d'un signal externe, ou
- la détermination d'un besoin actuel en puissance électrique du réseau d'alimentation (22).

5. Procédé selon l'une quelconque des revendications précédentes,
**caractérisé en ce que**
- la deuxième partie (P2), acheminée au consommateur (6), de la puissance électrique (P0) produite est ajoutée totalement à la première partie (P1), injectée dans le réseau d'alimentation électrique (22), de la puissance électrique (P0) de sorte que la deuxième partie (P2) de la puissance électrique (P0) produite est déviée par une opération de commutation de telle manière qu'elle est prête, conjointement avec la première partie (P1), pour être injectée dans le réseau d'alimentation électrique (22).

6. Procédé selon l'une quelconque des revendications précédentes,
**caractérisé en ce que**
- la ou une troisième partie (P3), acheminée au ou à un accumulateur électrique (8), de la puissance électrique (P0) produite est ajoutée en totalité à la première partie (P1), injectée dans le réseau d'alimentation électrique (22), de la puissance électrique (P0) de sorte que la troisième partie (P3) de la puissance électrique (P0) produite est déviée par une opération de commutation de telle sorte qu'elle est prête, conjointement avec la première partie (P1), pour être injectée dans le réseau d'alimentation électrique (22).

7. Procédé selon l'une quelconque des revendications précédentes,
**caractérisé en ce que**
l'ensemble d'injection (1) présente un onduleur (4) avec un circuit intermédiaire de tension continue, et la première et la deuxième partie de la puissance électrique (P0) sont déviées en totalité ou en partie de telle sorte qu'elles sont acheminées directement dans le circuit intermédiaire de tension continue.

8. Ensemble d'injection (1) pour injecter une puissance électrique (6) dans un réseau d'alimentation électrique (22), comprenant
- une éolienne (2) pour produire une puissance électrique (P0),
- un moyen d'injection (4) pour injecter au moins une première partie (P1) de la puissance électrique (P0) produite par l'éolienne (2) dans le réseau d'alimentation électrique (22),
- un consommateur électrique (6) pour consommer au moins une deuxième partie (P2) de la puissance électrique (P0) produite par l'éolienne (2),
- un accumulateur électrique (8) pour acheminer une troisième partie (P3) de la puissance électrique (P0) produite par l'éolienne (2), et
- un système de commande (10) pour commander l'ensemble d'injection (1), pour commander un flux de puissance,
dans lequel l'ensemble d'injection (1) est relié au réseau d'alimentation électrique (22) au moyen d'un transformateur (24),
dans lequel l'éolienne est reliée au consommateur électrique (6) et à l'accumulateur électrique (8) dans un bloc de distribution (18) par l'intermédiaire d'une tension continue produite par le redresseur (16) et le bloc de distribution (18) sert à la répartition de puissance sur un niveau de tension continue,
dans lequel le consommateur électrique est un dispositif de conversion (6) pour convertir la puissance électrique (P2) en une autre forme d'énergie, dans lequel le transformateur transforme une tension alternative sur une valeur de tension plus élevée, et
dans lequel le système de commande (10) est mis au point pour exécuter un procédé selon l'une quelconque des revendications 1 à 7.

9. Ensemble d'injection (1) selon la revendication 8, comprenant un onduleur (4) avec un circuit intermédiaire de tension continue pour injecter la première partie (P1) de la puissance électrique (P0) dans le réseau d'alimentation électrique (22).

10. Parc éolien comprenant plusieurs éoliennes (2) et un ensemble d'injection (1) selon l'une quelconque des revendications 8 et 9.
